# EUROPÄISCHE PATENTSCHRIFT

(11) **EP 0 538 906 B1**
(45) Veröffentlichungstag und Bekanntmachung des Hinweises auf die Patenterteilung: **21.02.1996**
(21) Anmeldenummer: 92120143.0
(22) Anmeldetag: 19.06.1990
(51) Int. Cl.: B62J 9/00

(54) **Abnehmbares, zur seitlichen Anbringung bestimmtes Zubehör für Fahrzeuge**
Removable accessory for vehicles destined for lateral attaching
Accessoires démontables pour véhicules destinés au montage latéral

(30) Priorität: 22.06.1989 DE 3920441; 17.08.1989 DE 3927086; 15.03.1990 DE 4008211
(43) Veröffentlichungstag der Anmeldung: 28.04.1993
(62) Teilanmeldung aus: 90111504.8
(73) Patentinhaber: RIXEN & KAUL GmbH, D-42699 Solingen (DE)
(72) Erfinder: Rixen, Edgar, D-5650 Solingen 11 (DE); Flammann, Norbert, D-5650 Solingen (DE)

(56) Entgegenhaltungen:
- DE-A- 3 151 794
- US-A- 4 096 980
- US-A- 4 516 705

## Beschreibung

Die Erfindung betrifft abnehmbares Zubehör für Fahrzeuge, insbesondere Zweiräder oder Kinderwagen etc. Als Zubehör kommen in erster Linie Packtaschen, aber auch anderes in erster Linie schweres und vorzugsweise wertvolles Zubehör, wie Werkzeugboxen in Frage, also Zubehör, das an Fahrrad oder Kinderwagen an irgendeiner Seite, sieht man von der Ober- oder Unterseite ab häufig befestigt und wieder abgenommen werden muß. Einerseits soll die Befestigung sicher sein, um ein unbeabsichtigtes Lösen des Zubehörs zu vermeiden, andererseits muß das Abnehmen des Zubehörs unproblematisch sein und vorzugsweise mit einer Hand vorgenommen werden können.

Aus der DE-OS 3151794 ist ein Box zur abnehmbaren Befestigung an einem Fahrradgepäckträger bekannt, die mit Haken an eine Längsstange des Gepäckträgers angehängt und dort verriegelt wird. Die Haken werden von unten in zwei Leistenstücke im oberen Rückenbereich der Box eingesetzt und die Box wird so an den Gepäckträger angehängt. Es besteht die Möglichkeit, die Haken wechselweise in unterschiedliche Aufnahmen an der Leiste einzusetzen, so daß die Haken zwischen die Querstangen des Gepäckträgers passen.

Nachteilig bei dieser Lösung ist, daß die einzelnen von unten eingesteckten Haken in ihrer Verankerung am Zubehör ausleiern und verloren gehen können. Beim bestimmungsgemäßen Gebrauch herausnehmbare Haken gehen leicht verloren. Weiterhin bahnt sich bei ausgeleierten Haken ein Sicherheitsproblem an; beim Durchfahren von Schlaglöchern können sich die Haken aus der Leiste lösen und im ungünstigsten Falle fällt die Box während der Fahrt runter. Die Ausführung mit zwei Leistenstücken bietet wegen der Trennung derselben keine Versteifung für die Box.

Schließlich hat die schrittweise Verstellung der Haken an der Leiste den Nachteil, daß die Box immer noch im Zentimeterbereich am Gepäckträger hin und herrutschen kann.

Der Erfindung liegt deshalb die Aufgabe zugrunde, ein einfach zu bedienendes Zubehör zur Befestigung an z.B. Fahrradgepäckträgern universell anpaßbar auszubilden.

Die Lösung dieser Aufgabe ist im kennzeichnenden Teil von Anspruch 1 wiedergegeben. Vorzugsweise sind zwei Haken vorgesehen, die beide an der Schiene verschiebbar und feststellbar sind. Nach der Erfindung kann das Zubehör, die Packtasche, die auch eine Hardbox sein kann, individuell so an den Gepäckträger angepaßt werden, daß die Befestigungshaken in jedem Falle zwischen die Querstege des Gepäckträgers passen und ein Verrutschen des Zubehörs durch ihre stufenlose Einstellbarkeit verhindern. Die Erfindung bezieht sich dabei nicht nur auf das Zubehör, z.B. eine Packtasche mit einer entsprechenden Befestigung, sondern auch auf die eigentlichen Befestigungsmittel, die z.B. zum Nachrüsten vorhandenen Zubehörs benutzt werden können.

Die mit Anspruch 2 verfolgte Ausführungsform der Erfindung berücksichtigt, daß das am Gepäckträger verriegelte Packstück möglichst komfortabel abgenommen und wieder angebracht werden können muß. Mit einem Handgriff kann das Gepäckstück grundsätzlich mit einer Hand gehoben werden. Jetzt steht die zweite Hand für die Entriegelung zur Verfügung. Nach Anspruch 3 ist der Handgriff bevorzugt im Bereich der Handhabe zur Entriegelung angeordnet. Da Gepäckstücke wie Packtaschen regelmäßig im Bereich ihres oberen Endes aufgehängt werden, sind Handhabe und Handgriff an einer Seitenwand, hauptsächlich am oberen Ende der Rückwand im Bereich des Deckels oder der Deckklappe angeordnet. Damit können die Haken mit dem Zubehör leichter gesteuert werden und in einem Hieb von oben an den Gepäckträger angehängt werden. Zur Verbesserung dieser Steuerbarkeit ist nach einem weiterbildenden Merkmal der Erfindung vorgesehen, den Handgriff und die Rückenversteifung als eine steife Baugruppe miteinander zu verbinden. Dadurch läßt sich das Zubehör mit einer Hand tragen und durch Verdrehen des Handgriffs können die Haken direkt an die Gepäckträgerstange von oben angehängt werden.

Hierzu ist in weiterer Ausgestaltung der Erfindung vorgesehen, daß die Handhabe zur Ver- bzw. Entriegelung des Zubehörs oberhalb der Haken vorgesehen ist. Im Ergebnis bewirkt diese Maßnahme, daß die Handhabe von der auf dem Zubehör liegenden oder dort angreifenden Hand zu erreichen ist. Damit ist die komplette Einhandbedienung zum Anhängen und Verriegeln bzw. Entriegeln und Abnehmen des Zubehörs erreicht.

Bei nicht ausreichend steifer Ausbildung von Zubehör und Gepäckträger oder einer sonstigen Befestigungsstelle kommt insbesondere die Ausgestaltung der Erfindung nach Anspruch 6 in Betracht. Dabei ist jeder Haken oder zumindest die beiden äußeren Haken sind mit je einem Riegel versehen, der ein Aushängen des Gepäckstücks an diesem Haken verhindert. Sämtliche Riegel sollen dann durch die Handhabe gemeinsam entriegelt werden. Bevorzugt wird die Verbindung der Riegel mit der gemeinsamen Handhabe durch eine einstückige Ausbildung oder ggf. durch eine starre Verbindung von Riegeln und Handhabe erreicht.

Bei ausreichend steifer Ausbildung des Packtaschenrückens und des Gepäckträgers wird die Weiterbildung der Erfindung nach Anspruch 8 bevorzugt. Sie zeichnet sich durch ihre bauliche Einfachheit aus, die den Zweck der zuverlässigen Verriegelung hinreichend erfüllt.

Bei einer Trennung von Riegel und Haken , wie sie mit Anspruch 8 verfolgt wird soll nach einer weiteren Ausführungsform der Erfindung neben mindestens einem verstell- oder verschiebbaren Haken auch der Riegel in Richtung der Gepächträgerstange beweglich sein, damit die flexible Anpassung der Packtaschen-Aufhängung auch für diese Ausführungsform erhalten bleibt.

Zur Verstellung von Haken und Riegel ist die Ausgestaltung der Erfindung nach Anspruch 10̸ vorgesehen. Das C-Profil kann aus Aluminium oder aus Kunststoff als Strangprofil hergestellt sein. Es erlaubt eine stufenlose Verstellung der Haken oder des Riegels und bietet eine große Steifigkeit des Zubehörs auch beim Transport vergleichsweise schwerer Lasten.

Die Erfindung wird im einzelnen anhand der Zeichnung näher erläutert, dabei zeigen :
- Fig. 1 :: eine andere Ausführungform der Zubehörbefestigung nach Linie I-I in Fig.3;
- Fig. 2 :: Eine Schnittdarstellung nach Linie II-II in Fig.3;
- Fig. 3 :: Eine Rückansicht einer an einem Fahrradgepäckträger befestigten Packtasche;
- Fig. 4 :: eine weitere Ausführungsform der Erfindung nach Linie IV-IV in Fig.5;
- Fig. 5 :: Eine Rückansicht entsprechend Fig.3 mit einer anderen Ausführungsform der Verriegelung;
- Fig. 6 :: eine Teil-Rückansicht auf ein Fahrrad mit Gepäckträger und daran befestigter Packtasche.

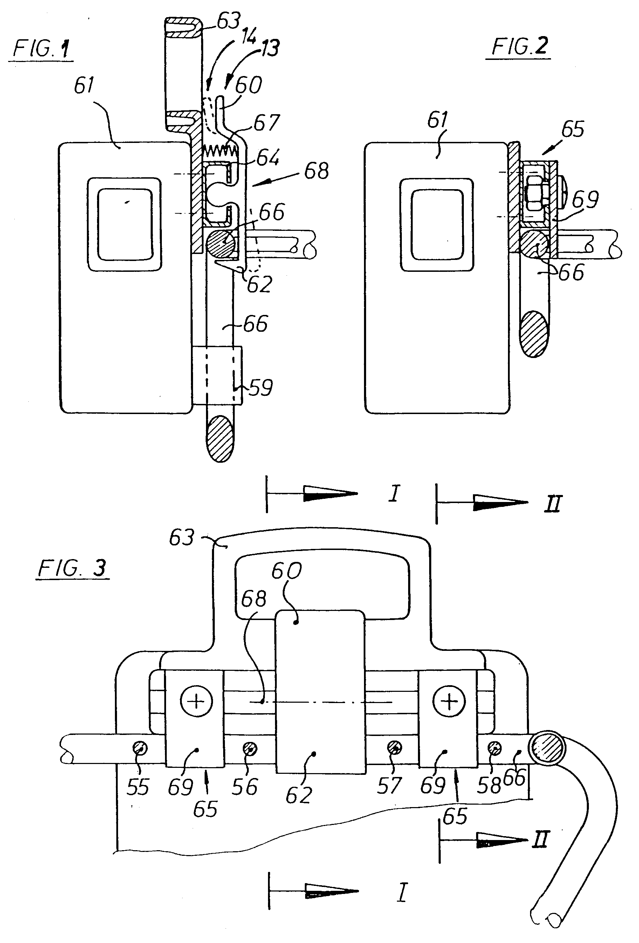

In den Fig.1, Fig.2 und Fig.3 ist die Rückansicht eines als Packtasche ausgebildeten Zubehörs 61 gezeigt, das an einer Stange 66 eines Fahrradgepäckträgers befestigt ist. Zur Befestigung gehören ein biegesteifer Handgriff 63, eine als C-Profil ausgebildete Versteifung 64, die mit dem Handgriff und der Packtasche durch Niete fest verbunden ist, eine Handhabe 60̸, eine Feder 67, ein Riegel 62, ein Gelenk 68 und zwei Haken 65, die von einer mit der Versteifung 64 verspannten Lasche 69, die die Stange 66 hintergreift und der Versteifung 64 gebildet werden. Riegel 62 und Handhabe 60̸ sind einstückig ausgebildet d.h. starr miteinander verbunden. Die Handhabe 60̸ ragt mit ihrem freien Ende in den Bereich der Finger der die Tasche tragenden Person, die die Tasche am Handgriff erfassen, hinein. Die Feder 67 drückt die Handhabe und den Riegel von der gestrichelt gezeichneten Entriegelungsstellung 14 in die in durchgezogenen Linien gezeichnete Verriegelungsstellung 13. Das Gelenk wird von der als C-Profil ausgebildeten Versteifung 64 und einer von dem Riegel 62 und der Handhabe 60̸ abstehenden und in das C-Profil hineingreifenden Lippe gebildet, deren verdicktes Ende ein Herausfallen aus dem C-Profil verhindert und eine kleine Schwenkbewegung von Handhabe und Riegel erlaubt. Zur Montage wird die Verdickung der Lippe von Riegel/Handhabe axial in das C-Profil hineingeschoben. Durch Betätigen der Handhabe 60̸ wird der Riegel 62 in die gestrichelt gezeichnete Freigabeposition geschwenkt, die Stange 66 des Fahrradgepäckträgers wird freigegeben und die ganze Packtasche kann mit den Haken 65 nach oben vom Fahrrad abgehoben werden.

Die beiden Haken 65 sind an den Längsenden der Versteifung im oberen Bereich der Packtasche angeordnet und der Riegel ist zentral zwischen den Haken vorgesehen. Damit wird erreicht, daß bei ausreichender Steifigkeit der Stange 66 des Gepäckträgers und der Versteifung 64 an der Packtasche nur ein Riegel 62 mittig zwischen den beiden Haken 65 vorgesehen werden muß. Der Handgriff 63, die Versteifung 64 und die Packtasche sind durch Niete starr miteinander verbunden. Die Versteifung 64 erstreckt sich im wesentlichen über die gesamte Breite der Packtasche. Die beiden Haken 65 sind an der als Versteifung 64 ausgebildeten Schiene relativ zum Riegel 62 verschiebbar und können so unterschiedlichen Abständen der Querstreben 55 - 58 in ihrem Abstand angepaßt werden. Die Packtasche ist im unteren Bereich durch eine weitere Verriegelung 59 mit der Stange 66 verbunden um ein Abschwingen der Packtasche in Kurven oder bei heftigen Lenkbewegungen zu vermeiden.

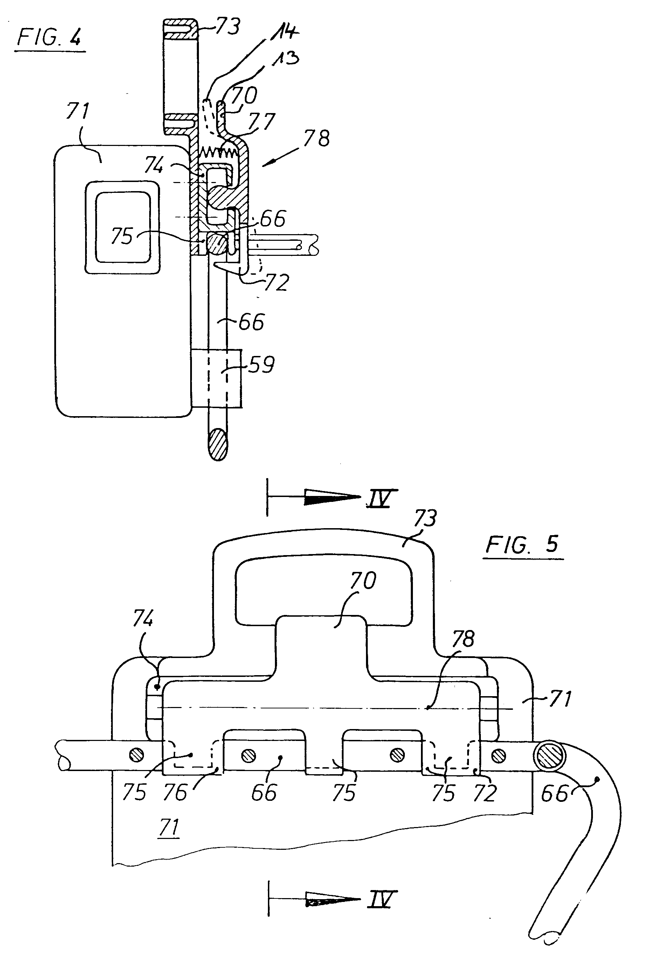

Die in den Fig.4 und Fig.5 gezeigte Ausführungsform ist der der Fig.1, Fig.2 und Fig.3 ähnlich. Die Befestigung der Packtasche 71 besteht aus einem Handgriff 73, mehreren Haken 75, die von zwei nach unten gezogenen Wangen einer Versteifungsschiene 74 gebildet werden, einer Handhabe 70̸ und zwei Riegeln 72, 76, die starr miteinander verbunden sind, wobei die Riegel die Haken 75 mit der erfaßten Stange 66 von unten verschließen, aus einer Feder 77 und einem Gelenk 78, das die Versteifungsschiene und die Kombination von Handhabe und Riegel miteinander verbindet. Im Bereich der Längsenden der Versteifungsschiene 74 ist für je einen Haken 75 ein Riegel 72, 76 vorgesehen, der die Stange 66 und die Packtasche 71 am gleichen Längsabschnitt der Stange 66, an dem sich auch die äußeren Haken 75 befinden, miteinander verriegelt. Die Haken 75 und die Riegel 72, 76 greifen dabei zwischen die Querstreben 55, 56, 57, 58, 59 des Gepäckträgers und sind dadurch auch gegen Verrutschen in Fahrtrichtung geschützt. Die Kombination aus der Handhabe 70̸ und den beiden Riegeln, die aus einem Stück Material ausgebildet ist, erstreckt sich über 50̸% bis 10̸0̸% der Breite der Packtasche 71, um eine unverrückbare Positionierung der Packtasche am Gepäckträger sicherzustellen. Die Riegel 72, 76 umgreifen die Stange 66 von der der Packtasche abgewandten Seite. Dadurch wird eine ergonomisch einfache Betätigung der Handhabe 70̸ ermöglicht, die in ihrer Richtung der Greifbewegung der den Handgriff erfassenden Finger entspricht.

Durch Betätigen der Handhabe 70̸ wird der Riegel in die gestrichelt gezeichnete Freigabe-Position geschwenkt und gibt die Stange 66 frei, so daß die Packtasche 71 nach Lösen der Verriegelung 59 im unteren Bereich der Packtasche frei abgehoben werden kann. Die Handhabe ist in Reichweite der den biegesteifen Handgriff 73 erfassenden Finger angeordnet. Entriegeln und Abheben der Packtasche 71 können so mit einer Hand erfolgen. Durch die starre Verbindung zwischen Packtasche, Handgriff und Befestigungsmittel an der Packtasche ist eine beliebige Bewegung der Packtasche etwa zum Einhängen oder Ablegen erleichtert.

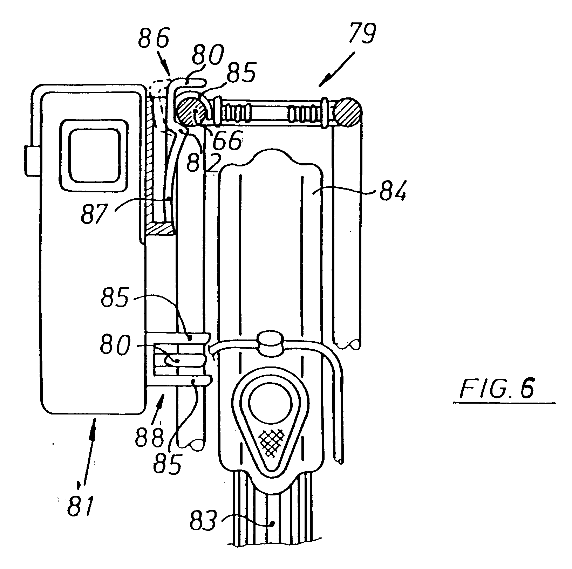

Fig.6 zeigt eine teilweise Rückansicht eines Fahrrades mit einem Hinterrad 83, einem Kotflügel 84, einer Packtasche 81 und 2 Befestigungselementen 86, 88 mit je einer Handhabe 80̸, und mit einem Federstab 87, der mit einer Verkröpfung als Riegel 82 aqusgestaltet ist. Die Packtasche 81 hängt mit mehreren Haken 85 an der Stange 66 des Fahrradgepäckträgers 79. Die Besonderheit dieser Ausführungsform ist darin zu sehen, daß der Federstab 87 als Gelenk dient, den Riegel 82 bildet und an seinem freien Ende die Handhabe 80̸ trägt, mit der die Freigabe-Position gegen den Widerstand des Federstabes eingestellt werden kann. Sobald die Handhabe in die in Fig.6 gestrichelt gezeigte Freigabeposition gedrückt wird, kann die Packtasche nach oder bei Lösen des Befestigungselementes 88 abgehoben werden. Der Federstab 87, der Riegel 82 und die Handhabe sind im wesentlichen zwischen Gepäckträger und Packtasche angeordnet.

## Patentansprüche

1. Abnehmbares, zur seitlichen Anbringung bestimmtes Zubehör (61) , insbesondere Transportbehälter wie Packtaschen für Fahrzeuge, wie Fahrräder, Kinderwagen und dergl. mit einer Verriegelung des Zubehörs am Fahrzeug mit Haken zur Aufhängung des Zubehörs am Fahrzeug , dadurch gekennzeichnet, daß zur Hakenbefestigung am Zubehör eine Schiene vorgesehen ist, mit einer Verschiebemöglichkeit und einer Arretierung für mindestens einen Haken und durch eine Handhabe (60̸) mit der der Riegel (62) zwischen einer Freigabe - Position (14) und einer Schließ - Position (13) hin- und herbewegt werden kann.

2. Zubehör nach Anpruch 1, gekennzeichnet durch einen Handgriff (63).

3. Zubehör nach Anspruch 1 dadurch gekennzeichnet, daß die Handhabe (60̸) federbelastet (67) ist, oder daß der Handgriff (63) in Reichweite der Handhabe (60̸) angeordnet ist.

4. Zubehör nach Anspruch 2 gekennzeichnet durch einen biegesteifen Handgriff (63) und dadurch, daß die Schiene (64) und der Handgriff (63) als eine starre Einheit ausgebildet sind.

5. Zubehör nach Anspruch 1, dadurch gekennzeichnet, daß die Handhabe (60̸) zur Ver- bzw. Entriegelung des Zubehörs (61) oberhalb der Haken (65) angeordnet ist.

6. Zubehör nach Anspruch 1 dadurch gekennzeichnet, daß die Handhabe (70̸) an mehrere Riegel (72, 76) angeschlossen ist.

7. Zubehör nach Anspruch 6, dadurch gekennzeichnet, daß die Handhabe (70̸) und mehrere Riegel (72, 76) zusammen einstückig ausgebildet sind.

8. Zubehör nach Anspruch 1, dadurch gekennzeichnet, daß zwei Haken (69) und nur ein Riegel (62) vorgesehen sind, um das Zubehör an der fahrzeugseitigen Stange (66) zu befestigen.

9. Zubehör nach Anspruch 1, gekennzeichnet durch einen quer zur Verriegelungsrichtung am Zubehör (61) verschiebbaren Riegel (62).

10. Zubehör nach Anspruch 9, dadurch gekennzeichnet, daß die Schiene am Zubehör (61) angeordnet ist und eine C - Form hat.

## Claims

1. Removable accessory (61) intended for lateral attachment, in particular transport containers such as panniers for vehicles, such as bicycles, prams and the like, having a device for latching the accessory to the vehicle with hooks for suspending the accessory from the vehicle, characterised in that a rail is provided to fasten the hooks to the accessory, with a possibility of displacement and an arresting means for at least one hook, and by a purchase (60) with which the latch (62) can be moved to and fro between a releasing position (14) and a locking position (13).

2. Accessory according to Claim 1, characterised by a handle (63).

3. Accessory according to Claim 1, characterised in that the purchase (60) is spring-loaded (67), or in that the handle (63) is arranged within reach of the purchase (60).

4. Accessory according to Claim 2, characterised by a flexurally stiff handle (63) and in that the rail (64) and the handle (63) are constructed as a rigid unit.

5. Accessory according to Claim 1, characterised in that the purchase (60) for latching and unlatching the accessory (61) is arranged above the hooks (65).

6. Accessory according to Claim 1, characterised in that the purchase (70) is connected to a plurality of latches (72, 76).

7. Accessory according to Claim 6, characterised in that the purchase (70) and a plurality of latches (72, 76) together are constructed in one piece.

8. Accessory according to Claim 1, characterised in that two hooks (69) and only one latch (62) are provided to fasten the accessory to the rod (66) located on the vehicle.

9. Accessory according to Claim 1, characterised by a latch (62) displaceable on the accessory (61) transversely to the latching direction.

10. Accessory according to Claim 9, characterised in that the rail is arranged on the accessory (61) and is C-shaped.

## Revendications

1. Accessoires (61) démontables destinés au montage latéral, en particulier pour des bacs de transport tels que des sacoches pour des véhicules comme des bicyclettes, des voitures d'enfant et des véhicules similaires, avec un blocage des accessoires sur le véhicule avec des crochets destinés à suspendre les accessoires au véhicule, caractérisés en ce que, pour fixer les crochets aux accessoires est prévu un rail, avec une possibilité de déplacement et un dispositif d'arrêt pour au moins un crochet et caractérisés par une manette (60) permettant d'actionner le verrou (62) entre une position de déblocage (14) et une position de fermeture (13).

2. Accessoires selon la revendication 1, caractérisés par une poignée (63).

3. Accessoires selon la revendication 1, caractérisés en ce que la manette (60) est commandée par ressort (67) ou en ce que la poignée (63) est disposée à portée de main de la manette (60).

4. Accessoires selon la revendication 2, caractérisés par une poignée (63) résistante à la flexion et en ce que le rail (64) et la poignée (63) se présentent sous la forme d'une unité fixe.

5. Accessoires selon la revendication 1, caractérisés en ce que la manette (60) destinée au blocage ou au déblocage des accessoires (61) est disposée au-dessus des crochets (65).

6. Accessoires selon la revendication 1, caractérisés en ce que la manette (70) est raccordée à plusieurs verrous (72, 76).

7. Accessoires selon la revendication 6, caractérisés en ce que la manette (70) et plusieurs verrous (72, 76) se présentent ensemble sous la forme d'une seule pièce.

8. Accessoires selon la revendication 1, caractérisés en ce que sont prévus deux crochets (69) et uniquement un verrou (62) pour fixer les accessoires sur la barre (66) située sur le côté du véhicule.

9. Accessoires selon la revendication 1, caractérisés par un verrou (62) déplaçable sur les accessoires (61) perpendiculairement au sens du blocage.

10. Accessoires selon la revendication 9, caractérisés en ce que le rail est disposé sur les accessoires (61) et a une forme de C.
